# EUROPÄISCHE PATENTSCHRIFT

(11) **EP 2 098 926 B1**
(45) Veröffentlichungstag und Bekanntmachung des Hinweises auf die Patenterteilung: **11.05.2011**
(21) Anmeldenummer: 08102396.2
(22) Anmeldetag: 07.03.2008
(51) Int. Cl.: G05B 19/042, G06F 9/44

(54) **Verfahren und Vorrichtung zum Programmieren und/oder Konfigurieren einer Sicherheitssteuerung**
Method and device for programming and/or configuring a safety controller
Procédé et dispositif adaptés à la programmation et/ou la configuration d'un contrôleur de sécurité

(43) Veröffentlichungstag der Anmeldung: 09.09.2009
(73) Patentinhaber: SICK AG, 79183 Waldkirch (DE)
(72) Erfinder: Bornstein, Patrick, 79117 Freiburg (DE); Dold, Franz Josef, 78120 Furtwangen (DE)
(74) Vertreter: Hehl, Ulrich

(56) Entgegenhaltungen:
- EP-A- 1 522 910
- EP-B- 1 362 269
- WO-A-2004/107067
- US-A- 5 812 394

## Beschreibung

Die Erfindung betrifft ein Verfahren zum Programmieren und/oder Konfigurieren einer Sicherheitssteuerung nach dem Oberbegriff von Anspruch 1 sowie eine Vorrichtung zur Durchführung des Verfahrens gemäß Anspruch 9.

Sicherheitssteuerungen dienen unter anderem dazu, bei Anliegen eines Gefahrensignals fehlerfrei auf eine vorgegebene Art zu reagieren. Eine typische Anwendung der Sicherheitstechnik ist die Absicherung gefährlicher Maschinen, wie etwa Pressen oder Roboter, die sofort abgeschaltet oder abgesichert werden müssen, wenn sich Bedienpersonal in unerlaubter Weise nähert. Dazu ist ein Sensor vorgesehen, der die Annäherung erkennt, wie etwa ein Lichtgitter oder eine Sicherheitskamera. Erkennt ein solcher Sensor eine Gefährdung, so muss eine mit dem Sensor verbundene Sicherheitssteuerung absolut zuverlässig ein Abschaltsignal generieren.

In der Praxis überwacht zumeist nicht ein einzelner Sensor eine einzelne Maschine, sondern es müssen eine ganze Reihe von Gefährdungsquellen überwacht werden. Die entsprechende Vielzahl zugehöriger Sensoren, die jeweils ein Schaltereignis definieren können, und geeigneter Maßnahmen zur Beseitigung von Gefährdungen muss dann in der Sicherheitssteuerung konfiguriert und verschaltet werden. Dabei ist eine fehlerfreie Konfiguration und Programmierung besonders wichtig, da sonst die Anlage nicht als sicher zertifiziert wird und damit nicht oder nur eingeschränkt eingesetzt werden kann.

Aus der EP 1 362 269 B1 ist ein Programmierverfahren bekannt, bei dem Eingänge, logische Verarbeitungsregeln und Ausgänge für eine Sicherheitssteuerung konfiguriert und ein Programm für den Betrieb einer Sicherheitssteuerung mit den konfigurierten Elementen zusammengestellt wird. Bei diesem Verfahren wird aber die physische Anordnung und Verdrahtung der Elemente nicht dargestellt, so dass das herkömmliche Verfahren nicht beim physischen Aufbau der Anlage unterstützt. Überdies ist nicht frei konfigurierbar, welche Eingänge auf welchen Ausgang wirken, denn es ist gerade die Idee des herkömmlichen Verfahrens, diese Zuordnung durch die tatsächliche relative Anordnung von Anschlüssen und Modulen festzulegen.

Die Norm IEC 61131 zur Programmierung von Steuerungssystemen beschreibt in IEC 61131-3 die grafische Programmierung mittels Funktionsbausteinen sowie eine IO-Schnittstellenbeschreibung in physikalisch-technischen Werten in IEC61131-2. Die Konfiguration der Eingangs- und Ausgangsbeschaltung und deren Schnittstellen zu Sensoren und Aktoren allerdings ist nicht standardisiert.

Keines der herkömmlichen Vorgehen ist aber besonders ergonomisch und übersichtlich. Die Projektierung einer Sicherheitsanlage startet typischerweise nicht damit, logische Verknüpfungen zwischen Eingängen und Ausgängen zu wählen. Eine solche Auswahl mit einer Vielzahl von logischen Verknüpfungsregeln wird auch schnell unübersichtlich und ist nicht mehr auf einer Bildschirmseite darstellbar. Diese Übersicht ist vor allem bei Netzwerken von verteilten Steuerungen nicht gegeben, weil herkömmlich nicht visualisierbar ist, zu welchem Teil des Netzwerks ein Eingang überhaupt gehört. Besonders schwerwiegend ist, dass in keinem herkömmlichen System eine Verknüpfung zwischen Auswertungslogik und physischer Konfiguration besteht und keinerlei Informationsaustausch zwischen diesen beiden Ebenen stattfindet.

In der noch unveröffentlichten eigenen Anmeldung unter dem Aktenzeichen EP 07013210.5 ist ein alternatives Verfahren zur Programmierung beschrieben. Dabei wird nicht nur die Auswertungslogik, sondern auch der physische Verdrahtungsplan mit einer grafischen Benutzeroberfläche erstellt. Bei diesem Verfahren müssen für jeden anzuschließenden Sensor oder Aktor geeignete Eingänge und Ausgänge von Hand zugewiesen werden. Dabei ist zusätzlich noch erforderlich, die Anschlussmodule von Hand auszuwählen, welche die benötigten Eingänge und Ausgänge überhaupt erst bereitstellen. Damit muss ein erheblicher manueller Aufwand für die Erstellung eines Verdrahtungsplans anzuschließender Sensoren und Aktoren betrieben werden.

Aus der WO 2004/107067 A1 ist ein Verfahren für die Zuteilung von Rechenressourcen in einem verteilten Steuerungssystem bekannt. Dabei wird eine vollständige Steuerungsfunktion vorgegeben, anhand derer eine Software-Library durchsucht wird, um automatisch eine passende optimale Hardwarestruktur aufzufinden und einen ausführbaren Code zu generieren. Die Harwarestruktur wird konfiguriert, wobei automatisch Hardwareadressen an Schnittstellen zugewiesen werden.

Die US 5,812,394 zeigt ein objektorientiertes Programm zum Konfigurieren einer Anlagensteuerung. Hat der Benutzer dabei eine Komponente ausgewählt und parametriert, so schlägt das Programm einen geeigneten Anschluss für die Komponente innerhalb eines I/O-Racks vor.

In der EP 1 522 910 A1 ist ein Verfahren zur Erzeugung eines ausführbaren Gesamt-Steuerungsprogramms offenbart. Dabei wird einerseits grafisch gestützt ein Funktionsmodell am Computer entworfen, das von der spezifischen Hardware noch abstrahiert. Andererseits wird in einer zusätzlichen Konfigurationsumgebung die Hardware festgelegt, und dann wird das Funktionsmodell für die vorgesehene Hardware compiliert.

Es ist daher Aufgabe der Erfindung, eine Möglichkeit für die Programmierung oder Konfiguration einer Sicherheitssteuerung zu schaffen, welche auf einfache und flexible Weise die Erstellung und Umsetzung von Verbindungskonfigurationen zwischen Sensoren, Aktoren und Sicherheitssteuerung ermöglicht.

Diese Aufgabe wird durch ein Verfahren zum Programmieren und/oder Konfigurieren gemäß Anspruch 1, eine entsprechende Vorrichtung gemäß Anspruch 9 sowie ein Computerprogrammprodukt gemäß Anspruch 10 gelöst. Der Begriff Sensor soll in einem sehr weiten Sinne als allgemeiner Signalgeber verstanden werden, der nicht unbedingt Ereignisse in der Umwelt detektiert, sondern beispielsweise auch wie ein Schalter oder eine Zeitschaltuhr Signale ausgibt. Die Steuerung kann in einer kompakten Ausführungsform Teil des Anschlussmoduls sein, welches dann gleichzeitig Steuerungs- und Anschlussmodul ist, gewöhnlich ist aber ein eigenes Steuerungsmodul vorgesehen. Die Steuerung kann zentral oder verteilt sein, und zwar sowohl über mehrere Module ein und derselben Modulreihe als auch verteilt über mehrere Modulreihen, welche untereinander über Feldbus oder dergleichen kommunizieren.

Die Erfindung geht von der Grundidee aus, die Zuordnung von Sensoren und Aktoren zu Anschlüssen der Sicherheitssteuerung zu automatisieren. Der Anwender, der die Sicherheitssteuerung konfiguriert, soll von manuellen Einzelschritten entlastet werden. Die Konfiguration beginnt ergonomisch und in Analogie zu einer Projektierung mit einem Mengengerüst erforderlicher Sensoren und Aktoren, nicht wie herkömmlich mit der logischen Verknüpfung.

Daraus ergibt sich der Vorteil einer übersichtlicheren und schnelleren Konfiguration. Die Arbeitsschritte sind einfacher und besser inhaltlich gegeneinander abgesetzt, da der Anwender zunächst sämtliche benötigten Funktionseinheiten, also Sensoren und Aktoren, auswählt und dann mit nur einem einzigen Knopfdruck die Verbindungen planen lässt. Letztlich ist der Anwender nicht daran interessiert, die Anschlüsse von Hand auszuwählen und zuzuweisen. Erfindungsgemäß wird ihm automatisch eine funktionsfähige richtige Zusammenstellung von Anschlussmodulen und ein funktionsfähiger Verdrahtungsplan vorgegeben. Er kann also ganz anwendungsbezogen planen und sich allein auf die Funktionseinheiten konzentrieren, nicht auf die Verbindungen und die Anschlussmodule, die letztlich nur ein unterstützendes Werkzeug sind. Es ist automatisch sichergestellt, dass ausreichend Anschlüsse der Sicherheitssteuerung vorhanden sind und diese zu den Funktionseinheiten passen. Trotz der Planung des Verdrahtungsplans auf Knopfdruck ist aber der Anwender nicht entmündigt, denn es ist jederzeit eine manuelle Nachbearbeitung möglich. Auch dabei kann das Konfigurationswerkzeug erneut unterstützen und Arbeitsschritte komfortabel zusammenfassen. Die Planung ist insgesamt übersichtlich, ergonomisch und fehlerreduziert, und dabei wird unabhängig von der Größe der Applikation das identische Konfigurationsverfahren mit einheitlichen, übersichtlichen Funktionen angeboten. Inkompatible Konfigurationen zwischen Sensoren und Eingängen oder Aktoren und Ausgängen können nicht mehr auftreten. Klassische Fehler wie Stromüberlast von Ausgängen oder fehlerhafte Testung von Sensoren werden vermieden.

Die Funktionseinheiten werden bevorzugt vorausgewählt und als vorausgewählt markiert, insbesondere durch Ablegen und/oder Anzeigen in einem Zwischenbereich für Funktionseinheiten, um welche die Sicherheitssteuerung erweitert werden soll, und die Zuordnungsfunktion ordnet sämtliche oder mehrere der vorausgewählten Funktionseinheiten automatisch zu. Der Anwender wählt also zunächst alle oder eine Gruppe benötigter Funktionseinheiten aus und behält hierbei die Übersicht, um welche Funktionseinheiten die Sicherheitssteuerung somit im nächsten Schritt erweitert wird. Besonders in einem Zwischenbereich liegen neu anzuschließende Funktionseinheiten übersichtlich beieinander.

Die Funktionseinheiten werden bei der Vorauswahl hinsichtlich eines oder mehrerer der folgenden Größen parametriert: Typbezeichnung, insbesondere Bestellnummer, Name, Hersteller; Anzahl der Anschlussklemmen; Art der Anschlüsse, insbesondere digital oder analog, einkanalig oder zweikanalig; Art des Signals, insbesondere antivalent, entgegengesetzt oder äquivalent, elektrische Größen wie Strom, Spannung, Kapazität; Kommunikationsprotokoll, insbesondere Art des Signals, Eingangs- und Ausgangsverzögerung, Diskrepanzzeit; physische Eigenschaften der Anschlüsse, insbesondere Drahtdurchmesser oder Steckertyp; Testmöglichkeiten, insbesondere Testsignale, Testdauer, Testzeitpunkt, erwartete Ausgaben bei einem Test, Dauer und Zeitpunkt der Testung. Die Parametrierung ermöglicht die angepasste Einbindung in die Sicherheitssteuerung. Es ist dann auch möglich, die gewählten Parameter später auf die physisch angeschlossenen Funktionseinheiten zu überspielen. Eine Parametrierung kann auch durch voreingestellte Werte mit oder ohne Rückfrage an den Anwender erfolgen. Die Vorauswahl ist ein geeigneter Zeitpunkt für die Parametrierung, da der Anwender sich hier entschieden hat, eine entsprechende Funktionseinheit einzusetzen. Die Parametrierung kann aber auch später vorgenommen oder geändert werden.

In einer bevorzugten Weiterbildung kann auch eine Teilapplikation, welche mehrere Sensoren und Aktoren umfasst, vorausgewählt und von der Zuordnungsfunktion automatisch zugeordnet werden. Eine solche Teilapplikation löst in vorkonfigurierter Weise einen standardisierten, häufig wiederkehrenden oder für eine bestimmte Anwendung von einem erfahrenen Anwender zugeschnittenen Teilaspekt der Sicherheitssteuerung. Der Anwender muss sich dann nicht mehr um die zugehörigen Funktionseinheiten und deren Einbindung in den Verdrahtungsplan kümmern, er wählt lediglich die Teilapplikation als Ganzes wie einen Sensor oder einen Aktor aus, so dass sie bei Aufruf der automatischen Zuordnungsfunktion in den Verdrahtungsplan eingebunden wird.

Die Zuordnungsfunktion prüft bevorzugt zunächst Art und Anzahl der benötigten Eingänge und/oder Ausgänge, und Anschlussmodule werden ergänzt, vertauscht, austauscht und/oder entfernt, so dass anschließend die verfügbaren Anschlussmodule die benötigten Eingänge und/oder Ausgänge bereitstellen. Die Modularität der Sicherheitssteuerung kommt hier voll zum Tragen, ohne dass der Anwender sich mit den Details befassen muss. Die Zuordnungsfunktion wählt für ihn automatisch eine passende Anordnung von Anschlussmodulen aus, um die vorausgewählten Funktionseinheiten zusätzlich anzuschließen.

Während oder nach der Zuordnung durch die Zuordnungsfunktion wird die Sicherheitssteuerung automatisch oder manuell optimiert, und zwar durch Verschiebungen oder Vertauschungen von Zuordnungen zwischen Sensoren und Aktoren zu Eingängen und Ausgängen und/oder durch Verschiebungen, Austausch, Entfernen oder Ergänzen von Anschlussmodulen, insbesondere um einen optisch oder funktionell übersichtlichen Verdrahtungsplan, kurze Schaltzeiten und/oder eine minimale Anzahl von Anschlussmodulen zu erreichen, um Anschlüsse für weitere Sensoren und/oder Aktoren bereitzustellen oder um möglichst wenig bestehende Zuordnungen zu ändern. Die Zuordnungsfunktion kann schon von sich aus die Anschlussmodule in einer optimierten Weise zusammenstellen. In einigen Fällen wird sie dabei aber eine aus guten Gründen nicht dem Optimierungskriterium entsprechende bereits vorhandene Teilkonfiguration ändern, und daher wird die Optimierung alternativ gesondert ausgelöst. Der Grund kann in besonderen Anforderungen der Anwendung oder des Anwenders liegen. Die Optimierungskriterien sind vorzugsweise wählbar. Wird eine komplett neue Anlage geplant, so können Kostengründe für möglichst wenige Anschlussmodule sprechen. Ist bereits absehbar, dass die Anlage erweitert werden soll, so kann es sinnvoll sein, schon freie Anschlüsse verfügbar zu halten. Wird eine Anlage erweitert, so spielt ein zusätzliches Anschlussmodul vielleicht eine geringere Rolle als der Wunsch, die bestehenden Anschlüsse unverändert zu lassen. Jedenfalls erhält mit dieser Ausführungsform der Anwender die Möglichkeit, eine Optimierung nach verschiedenen Kriterien zu automatisieren, was den besonderen Vorzug hat, dass das gewählte Optimierungskriterium im Gegensatz zu einer manuellen Zuordnung bei einer Änderung im Laufe derselben oder einer späteren Konfiguration auf erneuten einfachen Knopfdruck erfüllt bleibt.

In der grafischen Benutzeroberfläche werden vorzugsweise Auswertungsregeln festgelegt, um Signale der Sensoren an den Eingängen zu Ansteuerungen für die Aktoren an den Ausgängen zu verrechnen, und den Auswertungsregeln entsprechende Programmteile werden zur Implementierung der Logikregeln in der Sicherheitssteuerung erstellt, aktiviert und/oder verknüpft. Damit wird der Verdrahtungsplan um die logischen Regeln ergänzt, so dass insgesamt nach Herstellen der realen Verbindungen in der Anlage die Sicherheitssteuerung vollständig konfiguriert und programmiert ist.

Bei Veränderung der Zuordnung von Sensoren und Aktoren zu Eingängen und/oder Ausgängen in der grafischen Benutzeroberfläche bleibt die Auswertungslogik erhalten, insbesondere werden die Programmteile neu erstellt, aktiviert und/oder verknüpft, um die Implementierung der Logikregeln in der Sicherheitssteuerung konsistent zu halten. Die abstrakte Auswertungslogik, also welcher Sensor in welcher Weise auf welchen Aktor wirken soll, hängt nicht davon ab, welche von gleichwertigen Anschlüssen tatsächlich belegt ist, so dass bei Änderungen des Verdrahtungsplans die Logik automatisch nachgeführt und damit konsistent gehalten werden kann. Das Steuerungsprogramm selbst ist aber konkret auf den Verdrahtungsplan zugeschnitten und muss daher nach solchen Veränderungen angepasst werden.

Im Anschluss an die Zuordnungen und die Festlegung der Auswertungslogik wird bevorzugt das Programm und/oder die Konfiguration sicher auf die zentrale Steuerung und die Sicherheitssteuerung übertragen, die Sensoren, Aktoren und Anschlussmodule werden in der durch die Anschlussverfahren vorgegebenen Weise miteinander verbunden, von der Sicherheitssteuerung wird geprüft, ob die Verbindungen dem Programm und/oder der Konfiguration entsprechen und/oder die Sicherheitssteuerung führt einen Test aller angeschlossenen Sensoren und Aktoren aus. Mit diesen Schritten liegt ein getestetes System vor, welches der erstellten Konfiguration entspricht und betriebsbereit ist. Da zahlreiche Schritte der Konfiguration automatisiert sind, kann eine offizielle Zertifizierung für die Zulassung der Sicherheitssteuerung deutlich beschleunigt oder im besten Fall sogar überflüssig werden, da die Zertifizierung für das Konfigurationswerkzeug erfolgen und somit zumindest in Teilbereichen Konfigurationsfehler sicher ausschließen kann.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: die beispielhafte Darstellung einer Anzeige einer grafischen Benutzerober- fläche für die Konfiguration und/oder Programmierung einer Sicherheits- steuerung während der Auswahl von anzuschließenden Sensoren und/oder Aktoren;
- Fig. 2: die beispielhafte Darstellung einer Anzeige gemäß Figur 1 mit einer Konfi- guration einer Sicherheitssteuerung nach Aufruf einer Zuordnungsfunktion;
- Fig. 3: eine beispielhafte grafische Darstellung einer Auswertungslogik für die Konfiguration gemäß Figur 2;
- Fig. 4: die beispielhafte Darstellung einer Anzeige gemäß Figur 1 mit einer Si- cherheitssteuerung mit mehreren Steuerungsköpfen, die über ein Feldbus- system verteilt sind;
- Fig. 5: ein Ablaufschema als Übersicht über die Konfiguration und/oder Program- mierung einer Sicherheitsschaltung; und
- Fig. 6: eine schematische Darstellung einer modularen Sicherheitssteuerung mit angeschlossenen Sensoren und Aktoren, die erfindungsgemäß konfiguriert und/oder programmiert werden kann.

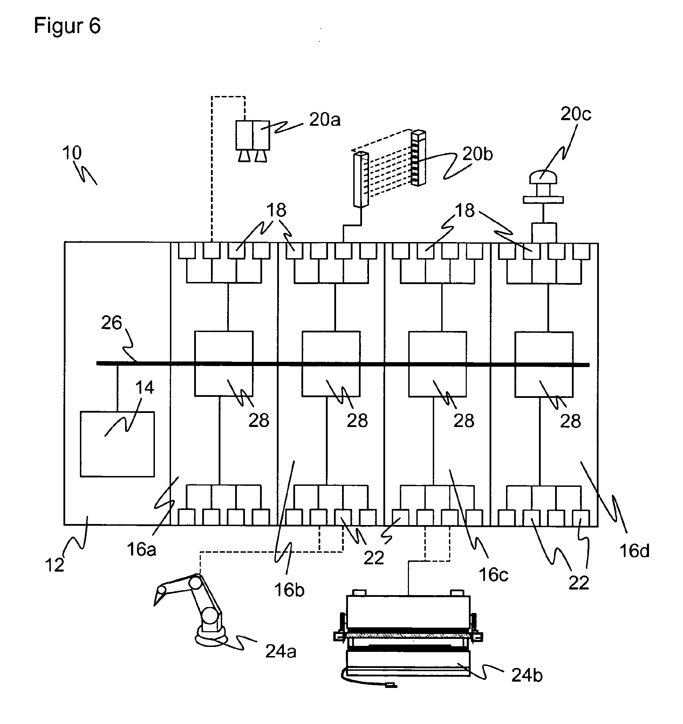

Figur 6 zeigt eine modulare Sicherheitssteuerung 10 mit einem zentralen Steuerungsmodul 12, welches eine zentrale sichere Steuerung 14 aufweist, sowie mit vier Anschlussmodulen 16a-d. In den Anschlussmodulen 16a-d sind Eingänge 18 zum Anschluss von Sensoren 20a-c und Ausgänge 22 zum Anschluss von Aktoren 24a-b vorgesehen. Im Gegensatz zu der Darstellung können sich die Anschlussmodule 16a-d in Art und Anzahl ihrer Anschlüsse unterscheiden und nur Eingänge, nur Ausgänge sowie eine Mischung aus beidem in unterschiedlicher Anzahl haben. Auch die Anordnung und die physische Ausbildung der Anschlussklemmen 18, 22 ist durch Wahl eines bestimmten Anschlussmoduls 16 anpassbar an verschiedene Steckertypen, Kabelgrößen und Signalarten.

Die Sicherheitssteuerung hat die Aufgabe, für einen sicheren Betrieb der Sensoren 20a-c und vor allem der Aktoren 24a-b zu sorgen, also Aktoren 24a-b sicherheitsgerichtet abzuschalten (der Ausgang 22 ist dann ein OSSD, Output Switching Signal Device), ein Not-Aus der Anlage sicher auszuführen, einer beliebigen Ansteuerung an einen Aktor 24a-b, besonders einem Einschalten oder einem Wiederhochfahren zuzustimmen, Aktoren 24a-b freizugeben und dergleichen.

Ein Lichtgitter 20b, eine Sicherheitskamera 20a und ein Schalter 20c sind Beispiele für sicherheitsrelevante Sensoren oder Eingänge, welche ein Signal liefern können, auf das als Reaktion eine sicherheitsgerichtete Abschaltung erfolgt. Dies kann eine Unterbrechung der Lichtstrahlen des Lichtgitters 20b durch ein Körperteil, die Erkennung eines unzulässigen Eingriffs in einen Schutzbereich durch die Sicherheitskamera 20a oder ein Betätigen des Schalter 20c sein. An die Eingänge 18 können weitere Sicherheitssensoren beliebiger Art, wie Laserscanner, 3D-Kameras, Schaltmatten oder kapazitive Sensoren angeschlossen werden, aber auch sonstige Sensoren etwa zur Aufnahme von Messdaten oder einfache Schalter wie ein Not-Aus-Schalter. Alle derartigen Signalgeber werden hier und im Folgenden als Sensor bezeichnet.

Bei bestimmten Anwendungen sind auch Sensoren 20 an Ausgänge 22 und Aktoren 24 an Eingänge 18 angeschlossen, etwa um Testsignale zu übertragen, um einen Sensor 20 vorübergehend stumm zu schalten (muting), Teilbereiche aus dem Überwachungsbereich des Sensors 20 auszublenden (blanking), oder weil ein Aktor 24 neben einem Eingang für Ansteuerungen auch eigene Signalausgänge besitzt, mit denen er sich zum Teil selbst überwacht.

Ein Roboter 24a und eine Abkantpresse 24b sind als Beispiele Bedienpersonal bei unzulässigem Eingriff gefährdender Aktoren bevorzugt zweikanalig an Ausgänge 22 angeschlossen und können somit von dem Sicherheitsschaltgerät 10 einen Abschaltbefehl erhalten, um bei Erkennung einer Gefährdung oder eines unzulässigen Eingriffs durch Sicherheitssensoren 20a-b die Aktoren 24a-b abzuschalten oder in einen sicheren Zustand zu verbringen. Dabei kann das Lichtgitter 20a der Überwachung der Abkantpresse 24a und die Sicherheitskamera 20b der Überwachung des Roboters 24b dienen, so dass einander funktionell zugehörige Sensoren 20a-b und Aktoren 24a-b auch jeweils an einem Modul 16a bzw. 16b angeschlossen sind. Die funktionelle Zuordnung erfolgt aber über die zentrale Steuerung 14, so dass eine solche Abbildung der Anlage zwar übersichtlicher, keineswegs aber erforderlich ist. Weitere als die dargestellten Aktoren sind denkbar, und zwar sowohl solche, welche einen Gefahrenbereich erzeugen als auch andere, etwa eine Warnlampe, eine Sirene, eine Anzeige und dergleichen mehr.

Zwischen der Sicherheitssteuerung 14 und den Eingängen 18 bzw. den Ausgängen 22 besteht eine Backplane genannte serielle Kommunikationsverbindung 26, die insbesondere ein Bus ist und auf einem seriellen Standard, einem Feldbusstandard, wie IO-Link, Profibus, CAN oder auch einem proprietären Standard basieren und zusätzlich auch fehlersicher ausgelegt sein kann. Alternativ zu einem Bus kann auch eine direkte, eine parallele Verbindung oder eine sonstige den zu kommunizierenden Datenmengen und den erforderlichen Schaltzeiten entsprechende Verbindung 26 vorgesehen sein. Die Module 16a-d weisen eine eigene Steuerung auf, um an der Buskommunikation teilnehmen zu können. Hierfür kann ein Mikroprozessor, ein FPGA, ein ASIC, eine programmierbare Logik oder ein ähnlicher digitaler Baustein vorgesehen sein. Die Steuerungen 18 können auch Auswertungsaufgaben übernehmen oder gemeinsam mit der zentralen Steuerung 14 verteilte Auswertungen vornehmen, die von einfachen Bool'schen Verknüpfungen bis hin zu komplexen Auswertungen, etwa einer dreidimensionalen Sicherheitskamera, reichen können.

Das Sicherheitsschaltgerät 10 kann über ein Gateway, welches ein eigenes Modul bildet oder in die Sicherheitssteuerung 14 integriert ist, an eine externe Anlagensteuerung angeschlossen sein, welche mit nicht sicherheitsrelevanten Steuerungsaspekten befasst ist. Die Anbindung kann drahtlos oder drahtgebunden, in der Praxis meist über einen Feldbus erfolgen. Gibt die externe Steuerung einen Befehl an einen der Aktoren 24, und zwar alternativ über die Ausgänge 22, welche auch Abschaltsignale ausgeben können, oder auf eigene Ausgänge, so wird er nur dann wirksam, wenn die Sicherheitssteuerung 10 zustimmt, also etwa durch UND-Verknüpfung von Ansteuerung und Zustimmungssignal. Damit wird verhindert, dass die externe Anlagensteuerung eine gefährliche Situation schafft. Die externe Steuerung kann umgekehrt eine Abschaltung der Aktoren 24 nicht verhindern, da die Sicherheitsaufgaben durch die Sicherheitssteuerung 10 gesteuert werden.

Die Module 12, 16a-d sind jeweils in einheitlichen Gehäusen untergebracht und werden durch Anschlussstücke mechanisch und elektrisch miteinander verbunden. Das Steuerungsmodul 12 bildet somit den Kopf einer Modulreihe. Denkbar ist auch, dass mehrere Steuerungsmodule 12 als Kopf mehrerer Modulreihen dezentral angeordnet sind, etwa jeweils in der Nähe der zu überwachenden Teile der Gesamtanlage, die untereinander über einen Feldbus kommunizieren. Die zentrale Steuerung 14 kann auch durch eine verteilte Steuerung ersetzt sein, welche sich über mehrere Anschlussmodule oder auch mehrere Modulreihen verteilt.

Sicherheitssteuerung 14, Eingänge 18, Ausgänge 22 und Bus 26 sind fehlersicher ausgebildet, also durch Maßnahmen wie zweikanalige Ausführung, durch diversitäre, redundante, selbstprüfende oder sonst sichere Auswertungen und Selbsttests. Entsprechende Sicherheitsanforderungen für die Sicherheitssteuerung sind in der Norm EN 954-1 bzw. ISO 13849 (performance level) festgelegt. Die damit mögliche Sicherheitsstufe und die weiteren Sicherheitsanforderungen an eine Anwendung sind in der Norm EN 61508 bzw. EN 62061 definiert.

Die Erfindung betrifft die Konfiguration und Programmierung der Sicherheitssteuerung 10. Dabei wird unter Konfigurieren die Auswahl von Elementen 12, 16, 20, 24, sowie deren physische Anordnung und Verbindung beziehungsweise Verdrahtung verstanden. Programmieren ist das auf Basis von Benutzerangaben automatische Erzeugen und Zusammenfügen von der Konfiguration entsprechenden Programmteilen unter Einbeziehung logischer Auswertungsregeln, welche die Elemente 12, 16, 20, 24 miteinander verbinden, um Eingangssignale der Sensoren 20 zu Ansteuerungen an die Aktoren 24 zu verrechnen. Das Vorgeben der Logik, also der logischen Auswertungsregeln, ist eine Mischung aus Konfigurieren und Programmieren, denn der Anwender muss lediglich die logischen Verbindungsregeln vorgeben, was einer Konfiguration nahe kommt, während daraus aber erfindungsgemäß automatisch anhand der zu den Verbindungsregeln hinterlegten Programmteile das Programm für die Sicherheitssteuerung 10 generiert wird, worin eher ein Programmieren liegt. Im Folgenden wird meist vereinfachend der Begriff Konfigurieren verwendet, welcher situationsabhängig eine Programmierung einschließen soll.

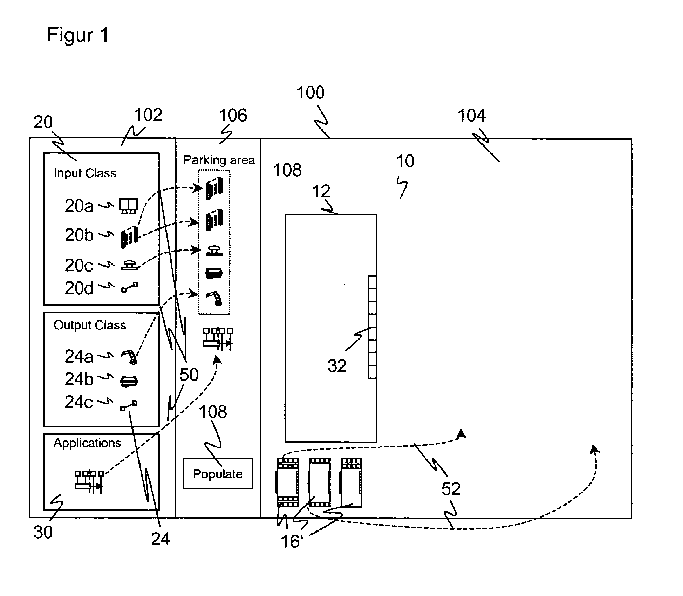

Figur 1 zeigt eine beispielhafte Anzeige 100 der grafischen Benutzeroberfläche (GUI, graphic user interface) eines nicht dargestellten Programmiergerätes zur Ausführung der erfindungsgemäßen Konfiguration einer Sicherheitssteuerung 10. Hier und im Folgenden werden gleiche Merkmale mit gleichen Bezugszeichen bezeichnet. Das Programmiergerät ist ein geeignetes Notebook, ein PC, ein PDA, ein Handy oder dergleichen mit einem Display für die Anzeige 100, einem Eingabegerät wie einer Tastatur und einer Maus und einem Prozessor zur Ausführung der Benutzeroberfläche und der Erstellung des resultierenden Konfigurationsplans, auch per Drucker, und des resultierenden Steuerungsprogramms für die Sicherheitssteuerung 10. Das Programmiergerät ist alternativ Teil der Sicherheitssteuerung 10 oder der übergeordneten Steuerung. Das Konfigurationswerkzeug, also das Programm für die grafische Benutzeroberfläche und die im Hintergrund zugehörigen Regeln zur Generierung des Steuerungsprogramms, ist auf einem Speichermedium gespeichert, wie einer CD oder einem USB-Stick. Bevorzugt ist es auch in der Sicherheitssteuerung 10 oder einer übergeordneten Steuerung gespeichert und kann von dort in einen üblichen Computer geladen und ausgeführt werden. Insbesondere kann es dabei als Webserver implementiert sein, der mit jedem für einen Browser geeigneten Gerät kommunizieren kann.

Anhand der Anzeige 100 wird nun beschrieben, wie ein Anwender erfindungsgemäß die Konfigurierung der Sicherheitssteuerung 10 mit Hilfe der grafischen Benutzeroberfläche durchführt.

Die Anzeige 100 bietet in einem linken Fenster 102 an die Sicherheitssteuerung 10 anschließbare Elemente an, nämlich Sensoren oder Eingangsklassen (input class) 20, Aktoren oder Ausgangsklassen (output class) 24 und Teilapplikationen (applications) 30. Neben der dargestellten Sicherheitskamera 20a, dem Lichtgitter 20b, einem Schalter 20c und einer Lichtschranke 20d umfassen die Eingangsklassen weitere zwei- und dreidimensionale Sicherheitskameras, Mutingsensoren, Sicherheitsmatten, Bumper, Sicherheitsschalter einschließlich Not-Aus-Schaltern, Zweihandschaltungen und weitere Geräte, die ein möglicherweise sicherheitsrelevantes Eingangssignal für die Sicherheitssteuerung 10 liefern können. Als Ausgangsklassen kommen über die dargestellten Roboter 20a, Pressen 20b und eine Lichtschranke 20c jegliche Maschinen, Roboter, Fahrzeuge, Lampen, Sirenen, aber auch Sensoren in Frage, die ein Feedback erhalten sollen, etwa zur vorübergehenden Deaktivierung (muting, blanking).

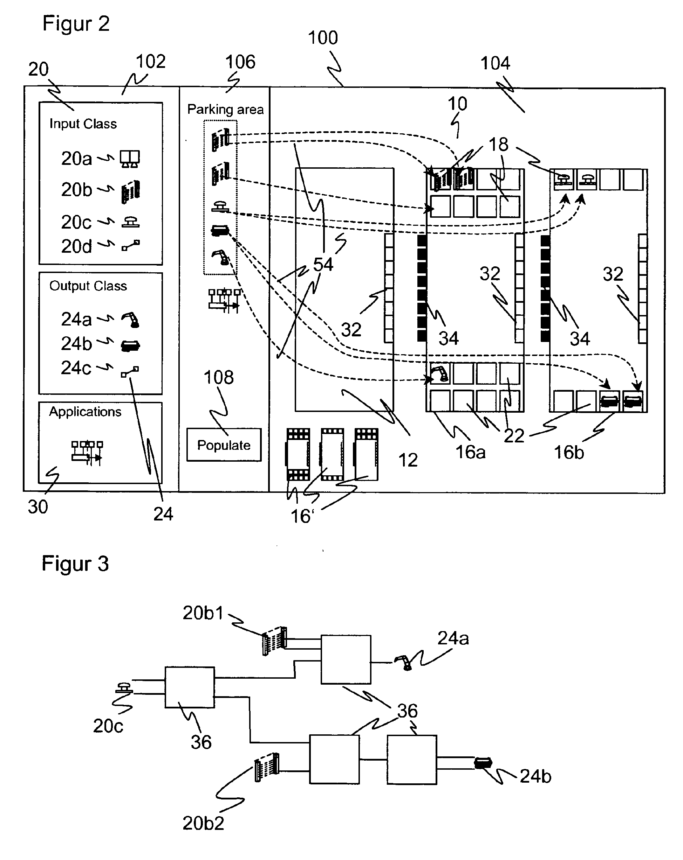

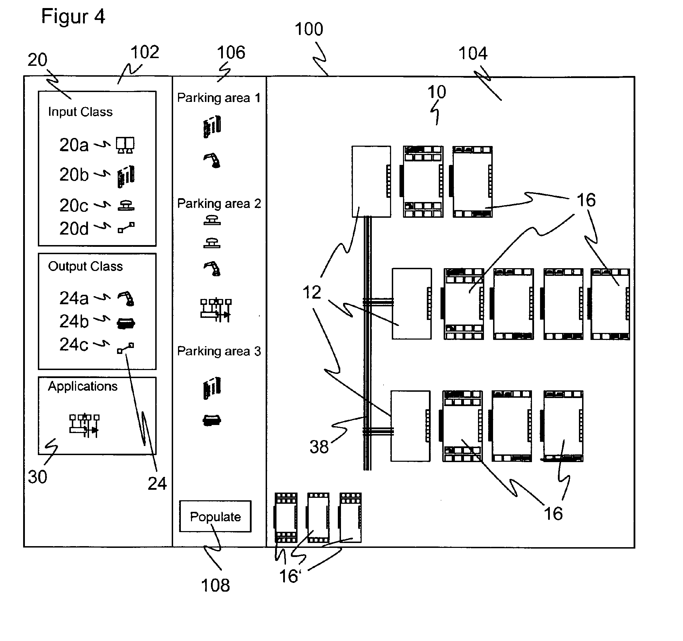

In einem rechten Fenster 104 wird die Konfiguration oder der Verdrahtungsplan der Sicherheitssteuerung 10 dargestellt. In der Anzeige 100 gemäß Figur 1 ist die Konfiguration noch unbestimmt und nur ein Steuerungsmodul 12 mit einer Buchse 32 für Anschlussmodule 16 gezeigt. Das Steuerungsmodul 12 kann alternativ auch eigene Eingänge und/oder Ausgänge aufweisen. Auch das Steuerungsmodul 12 ist auswählbar und legt die Architektur fest, beispielsweise Kompaktsteuerung mit eigenen Eingängen 18 und Ausgängen 22, modulare Steuerung mit Anschlussmodulen 16, mehrere Steuerungsmodulköpfe, die ein verteiltes Netzwerksystem bilden, oder gemischte und weitere Architekturen. Bei derartigen verteilten Systemen können dann mehrere Steuerungsmodule 12 mit jeweils angeschlossener Modulreihe aus Anschlussmodulen 16 dargestellt werden, also quasi eine Vervielfachung des dargestellten Inhalt in dem Fenster 104 der Figuren 1 und 2, wie dies weiter unten noch zu Figur 4 erläutert wird. Kleine Symbole 16' ermöglichen die Anbindung von Anschlussmodulen 16. Diese Anschlussmodule können sich in ihren Eigenschaften unterscheiden, etwa in ihrer Leistungsfähigkeit und Größe. Bevorzugt sind sie aber bis auf die Konfiguration der Anschlüsse 18, 22 für den Aufbau einer einheitlichen Modulreihe als Sicherheitsteuerung 10 untereinander identisch. Die drei Symbole 16' unterscheiden sich daher darin, dass das linke Symbol acht Eingänge 18 und acht Ausgänge 22 bietet, das mittlere Symbol vier Eingänge 18 und vier Ausgänge 22 und das rechte Symbol acht Eingänge 18 und keinen Ausgang 22. Hier sind selbstverständlich weitere Varianten vorstellbar.

Aus den angebotenen Eingangs- und Ausgangsklassen im linken Fenster 102 wird ein benötigter Sensor 20 oder Aktor 24, im Folgenden manchmal zusammenfassend als Funktionseinheit 20, 24 bezeichnet, von einem Anwender ausgewählt. Diese Funktionseinheit 20, 24 wird anschließend parametriert, indem durch verschiedene Fenster und Schaltflächen Werte, Modi und dergleichen eingestellt werden. Beispiele für parametrierbare Eigenschaften sind Typbezeichnungen einschließlich Bestellnummer, Name oder Hersteller, die Anzahl der Anschlussklemmen, die Art der Anschlüsse, insbesondere ob digital oder analog, die einkanalige oder zweikanalige Anbindung, die Art des Signals, insbesondere ob sich die beiden Kanäle eines zweikanaligen Anschlusses antivalent, entgegengesetzt oder äquivalent verhalten, elektrische Größen wie Strom, Spannung oder Kapazität, ein Kommunikationsprotokoll, also eine Einigung zwischen zentraler Steuerung 14 und der von dem neuen Element repräsentierten Funktionseinheit 20, 24 über die Signalübertragung welches beispielsweise die Art des Signals, die Eingangs- und Ausgangsverzögerung oder eine Diskrepanzzeit (Zeit, innerhalb derer die beiden Kanäle eines zweikanaliger Anschlusses dasselbe Signal anzeigen müssen, damit es als gültig erkannt wird) festlegt, physische Eigenschaften der Anschlüsse, insbesondere Drahtdurchmesser oder Steckertyp sowie Testmöglichkeiten einschließlich Testsignale, Testdauer, Testzeitpunkt, erwartete Ausgaben bei einem Test, Dauer oder Zeitpunkt der Testung und weitere denkbare Größen wie Kompatibilität zu IEC61131-2. Die Eigenschaften müssen also die vollständige und sichere Einbindung in die Sicherheitssteuerung 10 ermöglichen, vor allem hinsichtlich sicherheitsgerichteter Sensordaten und Abschaltsignale.

Die derart parametrierte Funktionseinheit 20, 24 wird zunächst in einem mittleren Fenster 106 (Parking area) abgelegt. Mit Auswahl weiterer Funktionseinheiten 20, 24 werden diese Schritte wiederholt, bis sämtliche oder eine gewünschte Teilmenge der benötigten Funktionseinheiten 20, 24 in dem mittleren Fenster 106 abgelegt sind. Diese Auswahl, bei der ein Typ von Funktionseinheit 20, 24 auch mehrfach ausgewählt und gleich oder unterschiedlich parametriert werden kann, ist durch Pfeile 50 veranschaulicht.

Alternativ zu einzelnen Funktionseinheiten 20, 24 können auch vorgefertigte, mehrfach gebrauchte oder standardisierte Teilapplikationen 30 vorausgewählt werden. Diese bringen ihre zugehörigen parametrierten Funktionseinheiten 20, 24 sowie die innere logische Verknüpfung bereits mit, so dass nur noch die äußere logische Verknüpfung vorgenommen werden muss, indem Freigaben und Abschaltpfade definiert werden. Ein Beispiel unter vielen ist ein sogenanntes "sequential muting", bei dem einige Lichtstrahlen eines Lichtgitters nacheinander stumm geschaltet werden, beispielsweise damit das erlaubte Durchfahren einer Palette mit bekannten geometrischen Eigenschaften nicht zu einem Abschaltsignal führt. Solche Teilapplikationen beschleunigen die Konfiguration und machen sie fehlersicherer, weil die innere Konfiguration der Teilapplikation nur einmal, auch ab Werk oder durch einen Experten, vorgegeben werden. Die Teilapplikation 30 kann wie in Figur 1 als Einheit dargestellt und behandelt werden. In dieser Ausführungsform soll sie sprachlich unter Funktionseinheit subsumiert sein, obwohl es sich dabei in der Regel um eine Vielzahl von verbundenen Funktionseinheiten 20, 24 handelt. Alternativ ist möglich, dass die Teilapplikation 30 beim Ablegen in dem Fenster 106 in ihre Funktionseinheiten zerfällt, so dass die Teilapplikation in dieser Alternative letztlich nur aus einer Menge von vorkonfigurierten Funktionseinheiten 20, 24 besteht.

In dem mittleren Fenster 106 befinden sich nach dieser Vorauswahl eine Reihe von Funktionseinheiten 20, 24. Statt diese Funktionseinheiten 20, 24 nun einzeln im rechten Fenster 104 an passende Anschlussmodule 16 anzuschließen, ist erfindungsgemäß vorgesehen, dies durch einen einzigen Aufruf einer Zuordnungsfunktion ("Populate") zu automatisieren. Die Zuordnungsfunktion berücksichtigt sämtliche Funktionseinheiten 20, 24 in dem mittleren Fenster 106, kann aber auch auf eine durch Benutzerauswahl definierte Teilauswahl eingeschränkt werden, wie dies durch das gestrichelte Rechteck 108 auch dargestellt ist.

Diese Zuordnungsfunktion ermittelt nach ihrem Aufruf zunächst, welche Anschlüsse 18, 22 die anzuschließenden Funktionseinheiten 20, 24 benötigen. Dies lässt sich beispielsweise für jede einzelne Funktionseinheit 20, 24 als fester oder eingestellter Pa rameter auslesen. Als zweiten Schritt wird geprüft, welche Anschlüsse 18, 22 die vorhandenen Anschlussmodule 16 anbieten. In der Situation in Figur 1 ist die Konfiguration im rechten Fenster 104 noch völlig leer, es werden also zunächst gar keine Anschlüsse 18, 22 angeboten. Die erfindungsgemäße automatisierte Zuordnung von Funktionseinheiten 20, 24 zu Anschlüssen 18, 22 kann aber auch mehrfach, jeweils für eine Teilgruppe der anzuschließenden Funktionseinheiten 20, 24 erfolgen, die dann jeweils in dem Zwischenbereich 106 abgelegt und später durch Aufruf der Zuordnungsfunktion eingebunden werden. In diesem Fall sind bereits Anschlussmodule 16 vorhanden, deren Anschlüsse 18, 22 zum Teil noch nicht belegt sein können.

Wenn das Angebot an Anschlüssen 18, 22 geringer ist als der Bedarf, werden der Sicherheitssteuerung 10 von der Zuordnungsfunktion Anschlussmodule 16 hinzugefügt oder vorhandene Anschlussmodule 16 gegen andere Anschlussmodule 16 mit einer größeren Anzahl von Anschlüssen 18, 22 ausgetauscht. Im Beispiel der Figur 1 werden beispielhaft Anschlussmodule 16 wie durch Pfeile 52 bezeichnet ausgewählt.

Die weiteren Schritte der Zuordnungsfunktion werden anhand der Figur 2 erläutert, wobei dort bereits das Endergebnis gezeigt ist. Die beiden soeben ausgewählten Anschlussmodule 16a-b sind der Sicherheitssteuerung 10 hinzugefügt, wobei jedes Anschlussmodul 16a-b eine Buchse 32 und einen Stecker 34 aufweist, um die Sicherheitssteuerung 10 als mechanisch einheitliche Modulreihe zusammenstecken zu können. Die Erfindung ist darauf nicht notwendig beschränkt, denn die Module können auch physisch voneinander getrennt sein, solange sie logisch verbunden bleiben.

Die wegen der vorausgehenden Prüfung und Auswahl ausreichend verfügbaren Anschlüsse 18, 22 der Anschlussmodule 16a-b werden von der Zuordnungsfunktion den Funktionseinheiten 20, 24 zugeordnet und damit entschieden, an welche Eingänge 18 und Ausgänge 22 jede Funktionseinheit 20, 24 anzuschließen ist. Dies ist durch Pfeile 54 illustriert. Dabei werden die Funktionseinheiten 20, 24 in das rechte Fenster 104 verschoben, und zwar optisch als Symbol oder Icon in jedem mit der Funktionseinheit 20, 24 verschalteten Eingang 18 oder Ausgang 22. Jede Funktionseinheit 20, 24 kann mehrere Anschlüsse 18, 22 belegen, etwa aufgrund mehrkanaliger Verbindung oder weil eine Funktionseinheit mehrere Signale liefert beziehungsweise mehrere Ansteuerungen annimmt

Somit hat die Zuordnungsfunktion automatisch jede Funktionseinheit 20, 24 einem passenden Anschluss 18, 22 eines passenden Anschlussmoduls 16a-b zugeordnet. Das rechte Fenster 104 zeigt die fertige Konfiguration von Modulen 12, 16a-b, die angeschlossenen Sensoren 20 und Aktoren 24 sowie die Zuordnung zu bestimmten Eingängen 18 und Ausgängen 22. In Figur 2 ist der abschließende Schritt der Zuordnungsfunktion noch nicht ausgeführt, mit dem die zugeordneten Funktionseinheiten 20, 24 aus dem mittleren Bereich 106 entfernt werden.

Mit einem einzigen Funktionsaufruf entsteht durch die Zuordnungsfunktion ein vollständiger Konfigurations- und Verdrahtungsplan für die einzubindenden Sensoren 20 und Aktoren 24 des mittleren Fensters 106. Es ist denkbar, die Zuordnungsfunktion in zwei Schritte aufzuteilen, wobei der erste Schritt die benötigten Anschlussmodule 16 auswählt und der zweite Schritt die Zuordnung von Funktionseinheiten 20, 24 zu Anschlüssen 18, 22 auswählt. Beide oder nur einer dieser Schritte können dann automatisch erfolgen.

Die von der Zuordnungsfunktion gewählten Verbindungen können weiterhin jederzeit verändert werden. So kann eine Funktionseinheit 20, 24 wieder entfernt, in das mittlere Fenster 106 zurückgeschoben oder von dort durch erneuten Aufruf der Zuordnungsfunktion wieder angeschlossen werden. Manuelle oder automatische Optimierung kann dafür genutzt werden, die vorhandenen Anschlussmodule 16 auszunutzen, mit weniger Anschlussmodulen 16 auszukommen oder für größere logische oder optische Übersicht zu sorgen. Eine häufige Optimierung ist, mit möglichst wenigen Anschlussmodulen 16 auszukommen, wobei umgekehrt manchmal gewünscht sein kann, Anschlüsse 18, 22 für spätere Erweiterungen freizuhalten. Ein Optimierungskriterium oder eine Randbedingung kann sein, keine oder nur wenige bereits physisch in der realen Anlage vorhandene Anschlüsse umstecken zu müssen. Solche und weitere Optimierungen können manuell, aber auch automatisch nach gewünschten Kriterien vorgenommen werden.

In einer alternativen Ausführungsform ist die Optimierung in die Zuordnungsfunktion integriert, so dass bereits unmittelbar nach dem Zuordnen der optimierte Verdrahtungsplan vorliegt. Eine solche optimierende Zuordnungsfunktion sollte die Auswahl der Optimierungskriterien als Option anbieten und auch abschaltbar sein, da sie nicht nur Zuordnungen der Elemente des mittleren Fensters 106 betrifft und in bestimmten Situationen auch unerwünschte Effekte haben kann.

Nachdem somit die physische Zuordnung oder der Verdrahtungsplan festgelegt ist, muss noch die logische Verknüpfung geschaffen werden. Fig. 3 zeigt eine weitere Ansicht der grafischen Benutzeroberfläche mit denselben Funktionseinheiten, deren Verdrahtungsplan mit der Zuordnungsfunktion erstellt wurde, nämlich zwei Lichtgittern 20b1, 20b2, einem Not-Aus-Schalter 20c, einem Roboterarm 24a und einer Presse 24b. Diese Elemente werden mit virtuellen Logikbausteinen 36 verbunden, welche Auswertungsregeln repräsentieren.

Beispielsweise wird zur Einbindung des Not-Aus-Schalters 20c zunächst das Signal vervielfältigt, damit es sowohl auf Roboter 24a wie Presse 24b wirken kann, und anschließend mit jeweils einem Lichtgitter 24b1, 24b2 durch logisches UND verbunden, so dass jedes kritische Eingangssignal zu einer Abschaltung führt. Die Presse 24b ist zweikanalig angebunden, wofür ein virtueller Baustein 36 den Ausgang des logischen UND verdoppelt. All dies ist rein beispielhaft zu verstehen, so hängt die tatsächliche Auswertungsregel noch vom Signal ab, ob nämlich invertierte Signale zu verarbeiten sind und dann ein UND das logische ODER ersetzt und dergleichen. Der Roboterarm 24a ist in dem Beispiel sogar nur einkanalig angeschlossen. Dies dient demnach ausschließlich der Illustration der Möglichkeiten und ist unabhängig davon, ob das Beispiel damit zu einer sicheren Anwendung führen kann. Auch deutlich komplexere Auswertungsregeln als Bool'sche Logik bis hin etwa zu vollständigen Auswertungen von Kameradaten sind grundsätzlich vorstellbar.

Wichtig ist, dass die Elemente über vorgegebene Logikregeln 36 miteinander verbunden werden, um die Eingangssignale zu den für die Sicherheitsanwendung gewünschten Ansteuerungen zu verrechnen. Dazu muss jede Funktionseinheit 20, 24 mit einem oder mehreren passenden Logikbausteinen 36 einfach oder mehrfach verbunden werden. Das Konfigurationswerkzeug bietet dabei nur solche Verbindungen an, die mit dem jeweiligen Element auch geleistet werden, also etwa keine zweikanalige Anbindung für eine einkanalige oder einkanalig parametrierte Funktionseinheit 20, 24.

Werden physische Verbindungen von Funktionseinheiten 20, 24 im Rahmen einer Optimierung oder einer manuellen Änderung vertauscht, nachdem die Logik schon definiert wurde, also Funktionseinheiten 20, 24 anderen Eingängen 18 oder Ausgängen 22 desselben oder eines anderen Ausgangsmoduls 16a-b zugewiesen, so verändert sich dabei die Logik nicht. Die logischen Auswertungsregeln sind invariant gegenüber sol chen Vertauschungen; sie werden bei der abschließenden Generierung des Steuerungsprogramms automatisch richtig berücksichtigt.

Das automatische Nachführen der Auswertungslogik oder einer Zuordnungsliste erleichtert es erheblich, den Verdrahtungsplan zu optimieren. So können funktionell zusammengehörige Funktionseinheiten nachträglich Anschlüssen 18, 22 am selben Anschlussmodul zugeordnet werden, wobei eine Zusammengehörigkeit durch dieselbe Gefahrenquelle, aber auch durch denselben Typ von Funktionseinheit 20, 24 definiert sein kann. Der Anwender ist aufgrund der invarianten Auswertungslogik nicht gezwungen, strikt zuerst den Verdrahtungsplan und anschließend die Logik zu konfigurieren, sondern kann diese Schritte stückweise und nach seinem Belieben miteinander vermischen.

Mit Begriffen wie Auswählen, Verbinden und dergleichen sind im Zusammenhang mit der grafischen Benutzeroberfläche Symbole für Sensoren 20, Aktoren 24, Module 12, 16, Verbindungen, Logikelemente 36a-c und entsprechende Logikregeln über Menüs, Icons, Drag & Drop und dergleichen gemeint. Eine physische Verdrahtung in der realen Anlage folgt erst anschließend anhand des Konfigurations- oder Verdrahtungsplans.

Figur 4 zeigt eine weitere Ausführungsform der Erfindung, bei welcher mehrere verteilte Steuerungsmodule 12 vorgesehen sind, die über ein Feldbussystem 38 miteinander kommunizieren. Dabei kann entweder in jedem Steuerungsmodul 38 oder in einem eigenen Gatewaymodul, welches gegebenenfalls zugleich ein Anschlussmodul 16 ist, die Funktionalität für den Datenaustausch über den Feldbus implementiert sein. Die Zuordnungsfunktion kann auch bei einer solchen verteilten Sicherheitssteuerung 10 wie oben beschrieben arbeiten.

Besonders vorteilhaft ist aber, wenn wie in Figur 4 dargestellt mehrere Zwischenbereiche 106 (Parking area 1 - parking area 3) vorgesehen sind. Solche Zwischenbereiche 16 können durch Auswahl zusätzlicher Steuerungsmodule 12 automatisch oder manuell der grafischen Benutzeroberfläche hinzugefügt werden. Es besteht dann eine Korrespondenz zwischen einem Zwischenbereich 106 und einer zugehörigen Modulreihe mit einem der Steuerungsköpfe 12. Schon durch die Zwischenbereiche 106 wird also festgelegt, zu welchem Teil der verteilten Sicherheitssteuerung eine Funktionseinheit 20, 24 gehören soll. Die Zuordnungsfunktion ordnet dann die jeweiligen Funktionseinheiten dem richtigen zugehörigen Anteil der verteilten Steuerung zu, also einem An schlussmodul 16 des zugehörigen Steuerungsmoduls 12, und zwar ist denkbar, diese Zuordnungen durch Einzelaufruf nur für jeweils einen oder durch einen gemeinsamen Aufruf für einige oder alle Zwischenbereiche 106 durchzuführen. Selbstverständlich können die weiteren Merkmale der zu Figur 1 und Figur 2 beschriebenen Ausführungsformen auch hier verfügbar sein, insbesondere eine automatische Auswahl derjenigen Anschlussmodule 16, die für jeden Anteil der verteilten Sicherheitssteuerung 10 oder jedes Steuerungsmodul 12 benötigt werden, sowie Optimierungsfunktionen, um die Zahl und Anordnung der Anschlussmodule 16 nach einem oder mehreren der oben genannten Kriterien zu optimieren.

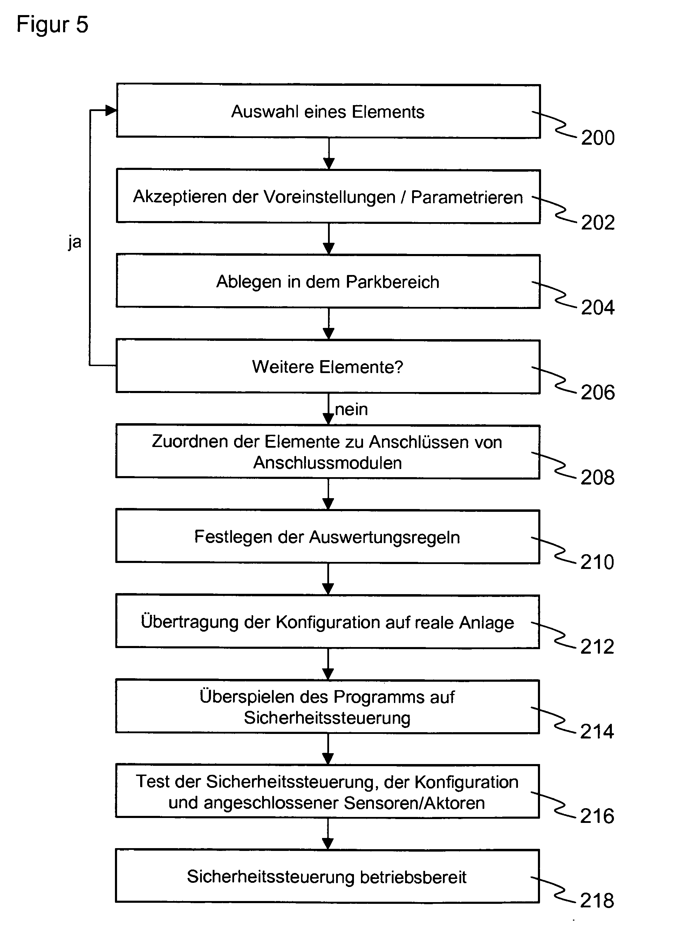

Figur 5 gibt noch einmal einen Gesamtüberblick über den Ablauf einer Konfiguration und Programmierung einer Sicherheitssteuerung 10. In einem ersten Schritt 200 wird ein Element ausgewählt, welches einen anzuschließenden Sensor 20 oder Aktor 24 repräsentiert.

Die ausgewählte Funktionseinheit 20, 24 wird in einem Schritt 202 parametriert, wobei jeweils das Akzeptieren von Voreinstellungen ausreichen kann. Die Funktionseinheit 20, 24 wird dann in einem Schritt 204 in dem mittleren Fenster 106 abgelegt. Im Schritt 206 entscheidet sich der Anwender, weitere Funktionseinheiten 20, 24 auszuwählen oder die in dem Fenster 106 abgelegten Funktionseinheiten 20, 24 in die Sicherheitssteuerung einzubinden. Dabei gibt es keine Beschränkungen hinsichtlich der Auswahl weiterer Funktionseinheiten, der Anwender kann also jederzeit weitere Funktionseinheiten 20, 24 auswählen und einbinden.

Die in dem mittleren Fenster abgelegten Funktionseinheiten 20, 24 werden durch Aufruf der Zuordnungsfunktion in einem Schritt 208 Eingängen 18 und Ausgängen 22 geeigneter Anschlussmodule 16a-b zugeordnet, wobei gegebenenfalls Anschlussmodule 16a-b automatisch ausgetauscht oder ergänzt werden, und dies entsprechend in dem Fenster 106 dargestellt. Diese Zuordnungsfunktion wurde oben im Zusammenhang mit den Figuren 1 und 2 ausführlich erläutert.

In einem Schritt 210 werden die Auswertungsregeln festgelegt, wie dies oben im Zusammenhang mit Figur 3 beschrieben wurde. Die entstehende Konfiguration kann durch Änderungen des Verdrahtungsplans manuell oder automatisch geändert oder optimiert werden, wobei die Auswertungsregeln automatisch nachgeführt werden.

In einem Schritt 212 wird der in der Anzeige 100 gezeigte Konfigurationsplan in die reale Anlage übertragen, indem entsprechende Leitungen zwischen Sensoren 20, Aktoren 24 und der Sicherheitssteuerung 10 gelegt und angeschlossen werden. Die benötigten Funktionseinheiten 20, 24 sowie die benötigten Steuerungsmodule 10 und Anschlussmodule 16 können zuvor direkt über eine Maske online oder offline bestellt werden. Der Konfigurationsplan wird ausgedruckt oder anders angezeigt, und die Komponenten werden in der Werkhalle verdrahtet, ohne dass hierfür eine tiefere technische Kompetenz erforderlich wäre als das Lesen des Plans.

Aus der grafisch entworfenen Logik erstellt das Konfigurationswerkzeug in einem Schritt 214 ein Steuerungsprogramm durch Zusammenstellen von den Logikbausteinen 36a-b entsprechenden Teilprogrammen und Einbindung in ein Gesamtprogramm, welches auf die zentrale Steuerung 14 überspielt wird.

Die Steuerung 14 kann dann in einem Schritt 216 einen Test ausführen und dabei sämtliche angeschlossenen Funktionseinheiten 20, 24 nach ihrem Typ abfragen, gegebenenfalls einige oder alle der eingestellten Parameter an die Funktionseinheit 20, 24 übertragen, damit deren Parametrierung mit der Konfiguration übereinstimmt, und feststellen, ob die Anschlüsse richtig vorgenommen wurden. Dazu müssen Anschlüsse 18, 22 für eine entsprechende Datenkommunikation ausgebildet sein, beispielsweise über IO-Link oder ein Kommunikationsprotokoll, welches an den Anschlüssen 18, 22 die für den Datenaustausch benötigten Signale austauschen kann. Eine Übertragung von Daten ist in beide Richtungen denkbar: Hin zu den Funktionseinheiten 20, 24, um letztere zu parametrieren, oder in umgekehrter Richtung von den Funktionseinheiten 20, 24 zu der Sicherheitssteuerung 10 oder dem Konfigurationswerkzeug, um eine tatsächliche Parametrierung oder vollständige Konfiguration in das Konfigurationswerkzeug einzulesen.

Stimmen die vorgenommenen Anschlüsse nicht, so erzeugt die Steuerung 14 eine Fehlermeldung mit einem Hinweis, welche Funktionseinheiten 20, 24 beziehungsweise welche Verbindungen geändert werden müssen. Ein solcher Hinweis wird bevorzugt wieder über das Konfigurationswerkzeug angezeigt und bearbeitet. Sofern die Logik mit der vorhandenen physischen Konfiguration verträglich ist, kann die Steuerung 14 auch vorschlagen, statt der Verdrahtung das Steuerungsprogramm anzupassen. Abschließend kann die Steuerung 14 jede angeschlossene Funktionseinheit 20, 24 ge mäß der Testkonfiguration testen oder zu einem Selbsttest auffordern. Danach ist die Sicherheitssteuerung 10 in einem Schritt 218 betriebsbereit.

Eine Zertifizierung zur sicherheitstechnischen Zulassung ist erheblich erleichtert, weil zahlreiche denkbare Fehlkonfigurationen von dem Konfigurationswerkzeug abgefangen werden. Es genügt daher in dieser Hinsicht, das Konfigurationswerkzeug selbst zu zertifizieren und dem Anwender der Sicherheitssteuerung 10 erheblichen Aufwand zu ersparen.

Die oben für die Sicherheitssteuerung 10 beschriebenen und bei geforderter Sicherheitskategorie normierten Sicherheitsanforderungen gelten auch für die Konfiguration und Programmierung, besonders für die Generierung des Programms sowie für die Übertragung des Programms auf die Steuerung 14. Das Programmiergerät selbst darf notfalls abstürzen, da noch keine Gefahrenquellen existieren, die damit erstellte Konfiguration und das Programm dagegen müssen fehlersicher sein.

## Patentansprüche

1. Verfahren zum Programmieren und/oder Konfigurieren einer modularen Sicherheitssteuerung (10) mit einer Steuerung (14) und mindestens einem Anschlussmodul (16), welches Eingänge (18) für Sensoren (20) und/oder Ausgänge (22) für Aktoren (24) aufweist, wobei über eine grafische Benutzeroberfläche an die Sicherheitssteuerung (10) anzuschließende Funktionseinheiten (20, 24), also Sensoren (20) und/oder Aktoren (24), ausgewählt und Eingängen (18) und/oder Ausgängen (22) eines Anschlussmoduls (16) zugeordnet werden, wobei anzuschließende Funktionseinheiten (20, 24) mittels einer Zuordnungsfunktion automatisch geeigneten Eingängen (18) und/oder Ausgängen (22) zugeordnet werden, **dadurch gekennzeichnet, dass** zunächst mehrere Funktionseinheiten (20, 24), um welche die Sicherheitssteuerung (10) erweitert werden soll durch Ablegen und/oder Anzeigen in einem Zwischenbereich (106) für Funktionseinheiten (20, 24) vorausgewählt und als vorausgewählt markiert werden und dann die Zuordnungsfunktion sämtliche oder mehrere der vorausgewählten Funktionseinheiten (20, 24) automatisch zuordnet.

2. Verfahren nach Anspruch 1,
wobei die Funktionseinheiten (20, 24) bei der Vorauswahl hinsichtlich eines oder mehrerer der folgenden Größen parametriert werden: Typbezeichnung, insbesondere Bestellnummer, Name, Hersteller; Anzahl der Anschlussklemmen; Art der Anschlüsse, insbesondere digital oder analog, einkanalig oder zweikanalig; Art des Signals, insbesondere antivalent, entgegengesetzt oder äquivalent, elektrische Größen wie Strom, Spannung, Kapazität; Kommunikationsprotokoll, insbesondere Art des Signals, Eingangs- und Ausgangsverzögerung, Diskrepanzzeit; physische Eigenschaften der Anschlüsse, insbesondere Drahtdurchmesser oder Steckertyp; Testmöglichkeiten, insbesondere Testsignale, Testdauer, Testzeitpunkt, erwartete Ausgaben bei einem Test, Dauer und Zeitpunkt der Testung.

3. Verfahren nach Anspruch 1 oder 2,
wobei eine Teilapplikation (30), welche mehrere Sensoren (20) und Aktoren (24) umfasst, vorausgewählt und von der Zuordnungsfunktion automatisch zugeordnet wird.

4. Verfahren nach einem der vorhergehenden Ansprüche,
wobei die Zuordnungsfunktion zunächst Art und Anzahl der benötigten Eingänge und/oder Ausgänge (22) prüft und Anschlussmodule (16) ergänzt, vertauscht, austauscht und/oder entfernt, so dass anschließend die verfügbaren Anschlussmodule (16) die benötigten Eingänge und/oder Ausgänge (22) bereitstellen.

5. Verfahren nach einem der vorhergehenden Ansprüche,
wobei während oder nach der Zuordnung durch die Zuordnungsfunktion die Sicherheitssteuerung (10) automatisch oder manuell optimiert wird, und zwar durch Verschiebungen oder Vertauschungen von Zuordnungen zwischen Sensoren (20) und Aktoren (24) zu Eingängen (18) und Ausgängen (22) und/oder durch Verschiebungen, Austausch, Entfernen oder Ergänzen von Anschlussmodulen (16), insbesondere um einen optisch oder funktionell übersichtlichen Verdrahtungsplan, kurze Schaltzeiten und/oder eine minimale Anzahl von Anschlussmodulen (16) zu erreichen, um Anschlüsse (18, 22) für weitere Sensoren (20) und/oder Aktoren (24) bereitzustellen oder um möglichst wenig bestehende Zuordnungen zu ändern.

6. Verfahren nach einem der vorhergehenden Ansprüche,
wobei in der grafischen Benutzeroberfläche Auswertungsregeln festgelegt werden, um Signale der Sensoren (20) an den Eingängen (18) zu Ansteuerungen für die Aktoren (24) an den Ausgängen (24) zu verrechnen, und wobei den Auswertungsregeln entsprechende Programmteile zur Implementierung der Logikregeln in der Sicherheitssteuerung (10) erstellt, aktiviert und/oder verknüpft werden.

7. Verfahren nach Anspruch 6,
wobei bei Veränderung der Zuordnung von Sensoren (20) und Aktoren (24) zu Eingängen (18) und/oder Ausgängen (22) in der grafischen Benutzeroberfläche die Auswertungslogik erhalten bleibt, insbesondere die Programmteile neu erstellt, aktiviert und/oder verknüpft werden, um die Implementierung der Logikregeln in der Sicherheitssteuerung (10) konsistent zu halten.

8. Verfahren nach einem der vorhergehenden Ansprüche,
wobei das Programm und/oder die Konfiguration sicher auf die zentrale Steuerung (14) und die Sicherheitssteuerung (10) übertragen wird, die Sensoren (20), Aktoren (24) und Anschlussmodule (16) in der durch die Anschlussverfahren vorgegebenen Weise miteinander verbunden werden, von der Sicherheitssteuerung (10) geprüft wird, ob die Verbindungen dem Programm und/oder der Konfiguration entsprechen und/oder die Sicherheitssteuerung (10) einen Test aller angeschlossenen Sensoren (20) und Aktoren (24) ausführt.

9. Vorrichtung zum Programmieren und/oder Konfigurieren einer Sicherheitssteuerung (10), wobei die Vorrichtung eine Auswertungseinheit, ein Display für die grafische Benutzeroberfläche (100) und eine Eingabeeinrichtung für deren Benutzung aufweist, **dadurch gekennzeichnet, dass** die Vorrichtung eine Speichereinrichtung mit Programmcode zum Durchführen eines Verfahrens nach einem der Ansprüche 1 bis 8 enthält.

10. Computerprogrammprodukt mit einer Speichereinrichtung, welche Programmcode zum Durchführen eines Verfahrens nach einem der Ansprüche 1 bis 8 hält, wenn der Programmcode auf einem Computer ausgeführt wird.

## Claims

1. A method for programming and/or configuring a modular safety controller (10) having a control (14) and at least one connection module (16) which has inputs (18) for sensors (20) and/or outputs (22) for actuators (24), wherein functional units (20, 24) to be connected to the safety controller (10), i.e. sensors (20) and/or actuators (24), are selected via a graphical user interface and inputs (18) and/or outputs (22) are assigned to a connection module (16), wherein functional units (20, 24) to be connected are automatically assigned to suitable inputs (18) and/or to outputs (22) by means of an assignment function, **characterized in that** initially a plurality of functional units (20, 24), with which the safety controller (10) should be expanded, are preselected by storing and/or displaying in an intermediate region (106) for functional units (20, 24) and are marked as preselected and then the assignment function automatically assigns all or a plurality of the preselected functional units (20, 24).

2. A method in accordance with claim 1 wherein the functional units (20, 24) are parameterized on pre-selection with regard to one or more of the following values: type designation, in particular order number, name, manufacturer; number of connection terminals; type of connections, in particular digital or analog, single channel or two channel; type of signal, in particular antivalent, opposing or equivalent, electric size such as current, voltage, capacity; communication protocol, in particular type of signal, input delay and output delay, discrepancy time; physical properties of the connections, in particular wire diameter or connector type; test possibilities, in particular test signals, test duration, test time, expected outputs on a test, duration and time of testing.

3. A method in accordance with claim 1 or claim 2 wherein a partial application (30), which includes a plurality of sensors (20) and actuators (24), is preselected and automatically assigned by the assignment function.

4. A method in accordance with any one of the preceding claims
wherein the assignment function initially checks the type and number of the required inputs and/or outputs (22) and supplements, interchanges, exchanges and/ or removes connection modules (16), so that subsequently the available connection modules (16) provide the required inputs and/or outputs (22).

5. A method in accordance with any one of the preceding claims
wherein during or after the assignment by means of the assignment function the safety controller (10) is automatically or manually optimized and indeed by displacements or interchanges of assignments between sensors (20) and actuators (24) to inputs (18) and to outputs (22) and/or by displacements, exchange, removal or supplementation of connection modules (16), in particular to achieve an optically clear or functionally clear wiring diagram, short switching times and/or a minimum number of connection modules (16) to provide connections (18, 22) for further sensors (20) and/or actuators (24) or to change as few existing assignments as possible.

6. A method in accordance with any one of the preceding claims
wherein evaluation rules are determined in the graphical user interface to translate signals of the sensors (20) at the inputs (18) to signals for the actuators (24) at the outputs (22), and wherein the evaluation rules generate, activate and/or link corresponding program parts for the implementation of the logic rules in the safety controller (10).

7. A method in accordance with claim 6 wherein the evaluation logic is preserved in the graphical user interface on change of the assignment of sensors (20) and actuators (24) to inputs (18) and/or to actuators (22), in particular the program parts are newly generated activated and/or linked, to consistently retain the implementation of the logic rules in the safety controller (10).

8. A method in accordance with any one of the preceding claims
wherein the program and/or the configuration is/are reliably transferred to the central controller (14) and to the safety controller (10), the sensors (20), the actuators (24) and the connection modules (16) are connected to one another in the manner predefined by the connection method, the safety controller (10) checks whether the connections correspond to the program and/or the configuration and/or the safety controller (10) carries out a test of all connected sensors (20) and actuators (24).

9. An apparatus for programming and/or configuring a safety controller (10), wherein the apparatus includes an evaluation unit, a display for the graphical user interface (100) and an input device for its use, **characterized in that** the apparatus includes a memory device with program code for carrying out a method in accordance with any one of the claims 1 to 8.

10. A computer program product having a memory device which stores program code for carrying out a method in accordance with any one of claims 1 to 8 when the program code is carried out on a computer.

## Revendications

1. Procédé pour programmer et/ou configurer une commande de sécurité modulaire (10) comprenant une commande (14) et au moins un module de connexion (16), lequel comprend des entrées (18) pour des capteurs (20) et/ou des sorties (22) pour des actionneurs (24), et au moyen d'une interface utilisateur graphique on choisit des unités fonctionnelles (20, 24), donc des capteurs (20) et/ou des actionneurs (24), à connecter à la commande de sécurité (10) et ces unités fonctionnelles sont associées à des entrées (18) et/ou à des sorties (22) d'un module de connexion (16), dans lequel des unités fonctionnelles (20, 24) à connecter sont associées automatiquement au moyen d'une fonction d'association à des entrées (18) et/ou des sorties (22) appropriées,
**caractérisé en ce que** l'on effectue tout d'abord une présélection de plusieurs unités fonctionnelles (20, 24), qui doivent agrandir la commande de sécurité (10), par mémorisation et/ou affichage dans une zone intermédiaire (106) pour unités fonctionnelles (20, 24) et on les marque comme étant présélectionnées, et la fonction d'association associe alors automatiquement la totalité ou plusieurs des unités fonctionnelles (20, 24) présélectionnées.

2. Procédé selon la revendication 1,
dans lequel les unités fonctionnelles (20, 24) sont paramétrées lors de la présélection pour ce qui concerne une ou plusieurs des grandeurs suivantes : désignation de type, en particulier numéro de commande, nom, fabricant ; nombre des bornes de connexion ; type des connexions, en particulier numérique ou analogique, à un seul ou à deux canaux ; type du signal, en particulier antivalent, opposé ou équivalent, grandeurs électriques telles que le courant, tension, capacité ; protocole de communication, en particulier type de signal, retard à l'entrée et à la sortie, temps de divergence; propriétés physiques des connexions, en particulier diamètre des fils ou type de prise ; possibilité de tests, en particuliers signaux de test, durée de test, instant de test, sorties attendues lors d'un test, durée et instant de l'exécution du test.

3. Procédé selon la revendication 1 ou 2,
dans lequel on fait une présélection d'une application partielle (30), qui englobe plusieurs capteurs (20) et actionneurs (24), et celle-ci est automatiquement associée par la fonction d'association.

4. Procédé selon l'une des revendications précédentes,
dans lequel la fonction d'associations vérifie tout d'abord le type et le nombre des entrées et/ou sorties (22) nécessaires et procède au complément, à l'échange, à la permutation et/ou à la suppression de modules de connexion (16) de telle sorte que les modules de connexion disponibles mettent finalement à disposition les entrées et/ou sorties (22) nécessaires.

5. Procédé selon l'une des revendications précédentes,
dans lequel pendant ou après l'association par la fonction d'association, la commande de sécurité (10) est optimisée automatiquement ou manuellement, et cela par décalage ou par permutation d'associations entre capteurs (20) et actionneurs (24) par rapport aux entrées (18) et aux sorties (22), et/ou par décalage, échange, suppression ou complément de modules de connexion (16), en particulier selon un plan de câblage clair sur le plan optique ou fonctionnel, pour atteindre des temps de commutation courts et/ou un nombre minimum de modules de connexion (16) afin de mettre à disposition des connexions (18, 22) pour d'autres capteurs (20) et/ou actionneurs (24), ou pour modifier aussi peu que possible d'associations existantes.

6. Procédé selon l'une des revendications précédentes,
dans lequel des règles d'évaluation sont fixées dans l'interface utilisateur graphique, afin de procéder à des calculs sur des signaux des capteurs (20) au niveau des entrées (18) pour donner des signaux de pilotage pour les actionneurs (24) au niveau des sorties (24), et dans lequel des parties de programmes, correspondant aux règles d'évaluation et destinées à la mise en oeuvre des règles logiques sont établies, activées et/ou chaînées dans la commande de sécurité (10).

7. Procédé selon la revendication 6,
dans lequel en cas de modification de l'association de capteurs (20) et d'actionneurs (24) vis-à-vis d'entrées (18) et/ou de sorties (22) dans l'interface utilisateur graphique, la logique d'évaluation reste conservée, en particulier les parties de programmes sont nouvellement établies, activées et/ou chaînées, afin de maintenir homogène la mise en oeuvre des règles logiques dans la commande de sécurité (10).

8. Procédé selon l'une des revendications précédentes,
dans lequel le programme et/ou la configuration est transmis(e) de façon sûre à la commande centrale (14) et à la commande de sécurité (10), les capteurs (20), les actionneurs (24) et les modules de connexion (16) sont reliés les uns aux autres de la manière prévue par le processus de connexion, et la commande de sécurité (10) vérifie si les liaisons correspondent au programme et/ou à la configuration et/ou la commande de sécurité (10) exécute un test de tous les capteurs (20) et actionneurs (24) connectés.

9. Appareil pour programmer et/ou configurer une commande de sécurité (10), l'appareil comprenant une unité d'évaluation, un affichage pour l'interface utilisateur graphique (100) et un système d'entrée pour leur utilisation,
**caractérisé en ce que** l'appareil contient une unité de mémoire avec un code de programme pour mettre en oeuvre un procédé selon l'une des revendications 1 à 8.

10. Produit de programme d'ordinateur avec une unité de mémoire qui contient un code de programme pour mettre en oeuvre un procédé selon l'une des revendications 1 à 8 quand le code de programme est exécuté sur un ordinateur.
